(19) Europäisches Patentamt / European Patent Office / Office européen des brevets

(11) **EP 3 913 334 B1**

(12) **EUROPEAN PATENT SPECIFICATION**

(45) Date of publication and mention of the grant of the patent:
**03.04.2024 Bulletin 2024/14**

(21) Application number: **21167382.7**

(22) Date of filing: **08.04.2021**

(51) International Patent Classification (IPC):
**B65B 3/02** *(2006.01)*   **B65B 3/08** *(2006.01)*
**B65B 3/12** *(2006.01)*   **B65B 3/32** *(2006.01)*
**B65B 9/04** *(2006.01)*   **B65B 39/00** *(2006.01)*
**B65B 65/00** *(2006.01)*   **G01F 11/02** *(2006.01)*
**G01F 15/00** *(2006.01)*   **G01F 11/32** *(2006.01)*

(52) Cooperative Patent Classification (CPC):
**G01F 11/029; B65B 3/022; B65B 3/08; B65B 3/12; B65B 3/32; B65B 39/004; B65B 65/006; G01F 11/32; G01F 15/005;** B65B 9/042

(54) **LIQUID DOSING SYSTEM**

FLÜSSIGKEITSDOSIERSYSTEM

SYSTÈME DE DOSAGE DE LIQUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.04.2020 PL 43365820**

(43) Date of publication of application:
**24.11.2021 Bulletin 2021/47**

(73) Proprietor: **Gasiorowski, Marek**
**05-503 Glosków (PL)**

(72) Inventor: **Gasiorowski, Marek**
**05-503 Glosków (PL)**

(74) Representative: **Karcz, Katarzyna**
**Karcz Zakrocka Rzecznicy Patentowi sp.p.**
**Ul. E Orzeszkowej 14/3**
**02-374 Warszawa (PL)**

(56) References cited:
**EP-A1- 0 479 559**   **WO-A1-93/06449**
**WO-A1-2018/015648**   **CH-A5- 684 850**
**DE-A1- 4 429 864**   **IT-A1- MI20 100 941**
**US-A- 5 671 873**   **US-A1- 2008 226 475**
**US-A1- 2016 341 588**   **US-A1- 2021 285 806**

## Description

The invention relates to a liquid dosing system which may be applied in particular (but not limited to) in packaging household chemistry products, industrial chemistry products, cosmetics, food and pharmaceutical products; it is especially useful for packaging small products consisting of one or several chemically active substances, in a water-soluble film adapted to be dissolved in water. At present, a popular group of such products includes dishwasher and laundry detergent capsules. Packaging of these substances in a water-soluble film is very advantageous as the product can be used without unpacking. The film gets completely dissolved along with the substances it contains, leaving no waste. The substances packaged in a film constitute the final product, which can come in various shapes and colors, featuring attractive designs.

Machines for packaging products in a film are typically thermo-forming packaging machines in which two or more film layers are used. An example of a machine of this type is described in EP3656534. The packaged substance is placed in specific products, e.g. capsules, by means of multi-nozzle systems for dosing powdery substances, in particular powder.

The known in the art machines of the above type require that the product is dosed with high precision, i.e. about 1÷2 % of a dose volume and a short dosing time in a range of 1 ÷ 2 seconds for one dosing process. Economic requirements impose efficiency of filling machines to be in a range of about 1500 products per minute, which means that multi-nozzle systems must be used comprising 25 ÷ 50 nozzles. In order to ensure high precision dosing each nozzle must have its own individual dose adjustment system.

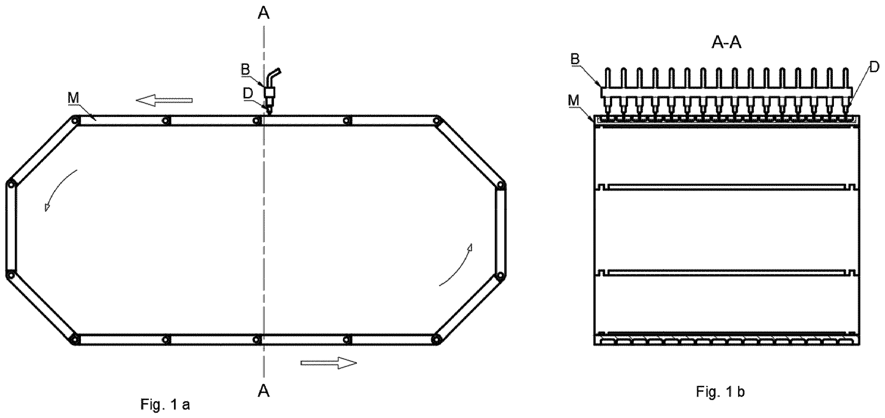

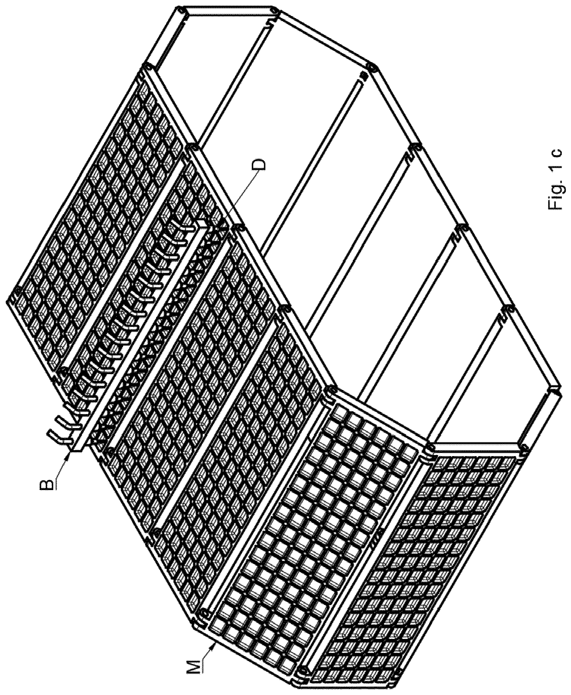

Such a multi-nozzle system cooperating with a conveyor consisting of modules M is shown in figs. 1a-1c. In each module M a mold with a plurality of cavities is installed. A row of dosing nozzles D is located on a beam B above the conveyor. The system may include more than one row of nozzles. An individual nozzle D is fed by means of an individual independent dosing system with its own dose adjustment means. In the state of art several different solutions are used for delivering measured portions of a liquid into the nozzles. The conveyor consisting of the modules M may be an intermittent motion or a continuous motion conveyor. In the case of intermittent motion the dosing typically takes place when the conveyor is stopped and the dosing nozzles move step by step together with their beam from one row of cavities to another. As a rule, during a single stop of the conveyor all the cavities of a multicavity mold of one module M are filled. In the case of a continuous motion conveyor, the dosing takes place "in motion", when the row of nozzles D is above an individual row of cavities. In such case the arrangement of the beam B with the nozzles D may be stationary or it may operate in a tracking mode, i.e. it can move forward during dosing of one row of cavities together with the conveyor, and then move backward to a next row of cavities to be filled. This operation is performed cyclically and the dosing system is moved back-and-forth.

As mentioned above, in the state of art several different solutions are used for delivering measured portions of a liquid into the nozzles. One of the known solutions includes using of accurate volumetric pumps driven by servomotors, in which one pump cooperates with one dosing nozzle only.

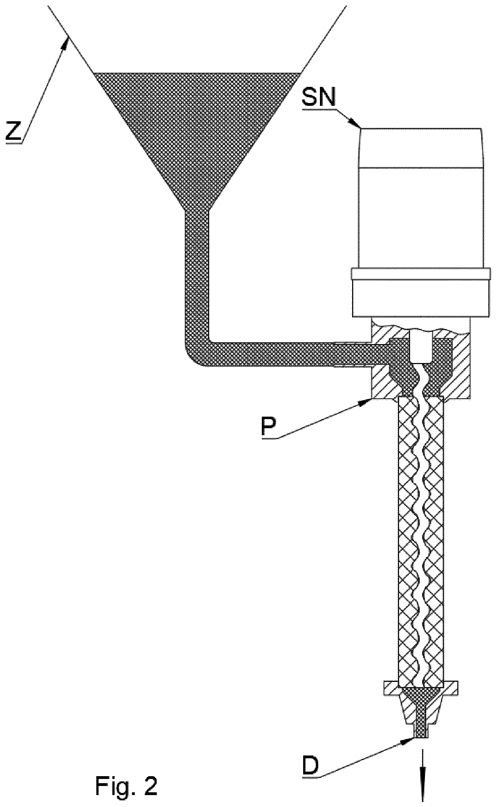

Such a solution is shown in fig. 2. It is a screw pump P having a rotor rotating tightly within a stator, the shape of the stator corresponding to the shape of the rotor driven by a servomotor SN. A liquid to be dosed is drawn into the pump P from a tank Z. The servomotor SN operates step by step, i.e. a rotation by a defined angle corresponds to one dose that is delivered by the dosing nozzle D. The volume of the dose is regulated by the size of the rotation angle of an individual step of the servomotor. The main disadvantage of this solution is that each dosing nozzle must be equipped with an individual expensive servo-driven pump. In the case of multi-nozzle system the costs are enormous which constitutes an economic constraint to their application.

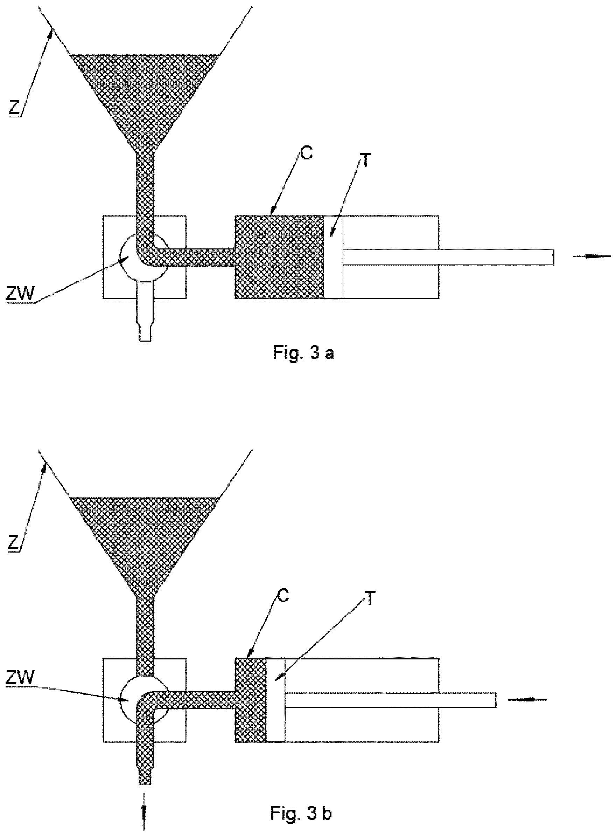

Another known solution is shown in figs. 3a and 3b. In fig. 3a the liquid is drawn from a tank Z into a cylinder C by means of a sliding piston T. The piston is moved by a pneumatic or electric actuator driven by a servomotor. When the liquid is being drawn in, the tank Z is communicated with the cylinder C through a rotary valve ZW. In fig. 3b the valve ZW connects the cylinder C with an exhaust pipe and it is rotated by 90° clockwise in relation to its position in fig. 3a. Fig. 3b shows the dosing process, the liquid is being pushed out of the cylinder through the exhaust pipe by the piston T. The volume of the dose is regulated by the pitch of the piston i.e. the pneumatic drive or the servo-drive.

The system shown in figs. 3a and 3b is a single piston pump having an individual drive cooperating with one dosing nozzle only. In the case of multi-nozzle systems in which the doses must be adjusted for each nozzle, it is necessary to use many such pumps, so the cost of such system is huge. As a result, the system has the same disadvantage as the system described above shown in fig. 2. Another disadvantage is that the speed of operation of such a system is limited. When the liquid is drawn in by the piston T moving too fast, cavitation may occur having negative impact on the precision of dosing.

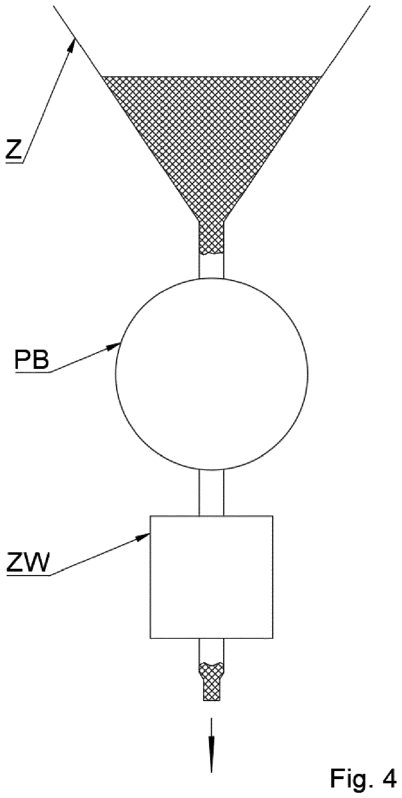

Another example of a known liquid dosing system is shown in fig. 4. The liquid is being drawn from a tank Z by a pump-buffer system PB and delivered to an electro-valve ZW. Irrespective of whether the electro-valve is closed or open, the pressure of the liquid delivered to the electro-valve is kept constant by the pump-buffer system. The dosing takes place when the electro-valve is open and the liquid flows out through the exhaust pipe. The volume of the dose is regulated by the opening time of the electro-valve. Both the pump-buffer system and the electro-valve are high precision expensive subassemblies. Each individual dosing nozzle must be equipped with its own separate system of these subassemblies. Obviously, this system has the same disadvantage as the other described systems. It is very expensive because it has numerous nozzles which are indispensable.

WO 2018/015648 discloses an assembly for distribution of a product in a liquid, pasty or foamed form, for supplying and depositing a precise quantity of a product on support. The assemble comprises a cylinder and a piston that can move in the cylinder by means of an actuator, and ejection head comprising a flap and an outlet nozzle. The flap can be moved between a closed position and an open position. When the cylinder approaches the support, the physical contact of a front rod of the flap with the support moves the flap from the closed position to the open position and triggers the supply of the product pushed by the piston. However, the assembly of WO 2018/015648 has a disadvantage consisting in that for the product to be released it requires the physical contact of the front rod with the support. Therefore it may be used e.g. for distribution of a product that is packaged in a delicate film which would be destroyed by said physical contact. Also, the assembly of WO 2018/015648 does not seem suitable for use with liquid products. This is because the valve, when in its closed position, contacts a transfer passage of the product along a sharp edge, which must lead to leaking and dripping when dealing with a liquid.

The object of the present invention was to provide a liquid dosing system having an individual dose regulation for each nozzle and being devoid of the disadvantages of the liquid dosing systems known in the art.

Another object of the present invention was to provide a liquid dosing system comprising a plurality of nozzles having a common driving assembly adapted to deliver doses of the liquid to products, the driving assembly comprising one common pressure feeding unit and one common exhaust unit.

Still another object of the invention was to provide a liquid dosing system with individual dose volume regulation for each nozzle in which the problem of liquid drops forming on the nozzle end would be eliminated.

According to the invention a liquid dosing system is provided comprising at least one feeding channel for feeding the liquid to the system and at least one dosing nozzle, each dosing nozzle communicating with the at least one feeding channel via a corresponding valve.

The liquid dosing system according to the invention is characterized in that the at least one feeding channel is adapted to feed the liquid in a state of overpressure, and in that a dosing module is located between each dosing nozzle and the corresponding valve, the dosing module comprising:

i. a cylinder with a first piston adapted to reciprocate within the cylinder between an upper position and a lower position;
ii. a dosing nozzle channel in which a spike is located, the spike being adapted to reciprocate within the dosing nozzle channel between an upper position in which the nozzle is open and a lower position in which the nozzle is closed;

wherein each valve may take a closed position in which the dosing module is cut off from the feeding channel, or an open position enabling a tight hydraulic communication of the feeding channel with the dosing module in which open position the over pressured liquid is pushing against the first piston within the cylinder, and

wherein the system is further provided with a first driving means adapted to cyclically move the first piston downwards and a second driving means adapted to cyclically move the spike between its upper position and its lower position in relation to the dosing nozzle channel, the first and second driving means being synchronized with each other and with each valve so that the first piston is moved downwards so that the liquid is pushed out of the system while the spike is in its upper position and the valve is in its closed position.

Preferably, the upper position of the first piston is defined by an adjustable blocking means limiting the upward movement of a stem of the first piston.

The inventive liquid dosing system may comprise at least two dosing nozzles, and in each dosing module of the corresponding dosing nozzle the upper position of the first piston is defined by the adjustable blocking means, the upper positions of said first pistons being located at the same level or at different levels.

The liquid dosing system preferably comprises at least two dosing nozzles, the system being provided with a common first driving means adapted to move simultaneously the first pistons of all the dosing modules and with a common second driving means adapted to move simultaneously the spikes of all the dosing modules.

Preferably, the second driving means of the spike and the first driving means of the first piston are constituted by pushrods which are adapted to be reciprocated from an upper position to a lower position, each pushrod being suspended by its opposite ends on a corresponding linear guiding mechanism.

The cylinder of the dosing module preferably communicates with the dosing nozzle channel via an internal channel.

The spike is preferably provided in its central part with a protuberance forming a second piston that is movable within a surrounding cylinder during the movement of the spike, said surrounding cylinder being hydraulically connected with the internal channel above the second piston, and communicating via a ventilation channel with the outside environment below the second piston.

The second piston preferably has an liquid contacting operational surface which is at least equal to a cross-section surface of the spike.

Preferably, the first driving means of the first piston and the second driving means of the spike are pneumatic, hydraulic or electric driving means.

In the system of the invention, a number of simple elements allow to deliver at high speed measured individual doses of a liquid.

A specific advantage of the invention consists in that one or more, e.g. two liquid sources operating alternately may be used, the liquid being fed to numerous dosing modules by a pneumatic, hydraulic or electric drive, e.g. a servo-drive.

Embodiments of the inventions are shown in the appended drawings in which:

Fig. 5a shows a cross-section of a first embodiment of the liquid dosing system according to the invention, the system having one dosing nozzle and being shown during a stage of filling the dosing module;

Fig. 5b shows a cross-section of the embodiment of fig. 5a after the dosing module has been filled and before dose delivery started;

Fig. 5c shows a cross-section of the embodiment of fig. 5a during dose delivery;

Fig. 5d shows a cross-section of a second embodiment of the system according to the invention after the dose delivery has been completed, during closing of the dosing nozzle by the spike;

Fig. 6a shows a side view of an embodiment of the liquid dosing system according to the invention, the system having six dosing nozzles;

Fig. 6b shows a top view of the system shown in fig. 6a;

Fig. 6c shows a front view of the system shown in fig. 6a;

Figs. 7a and 7b illustrate a method of dose adjustment in three dosing modules of the system according to the invention.

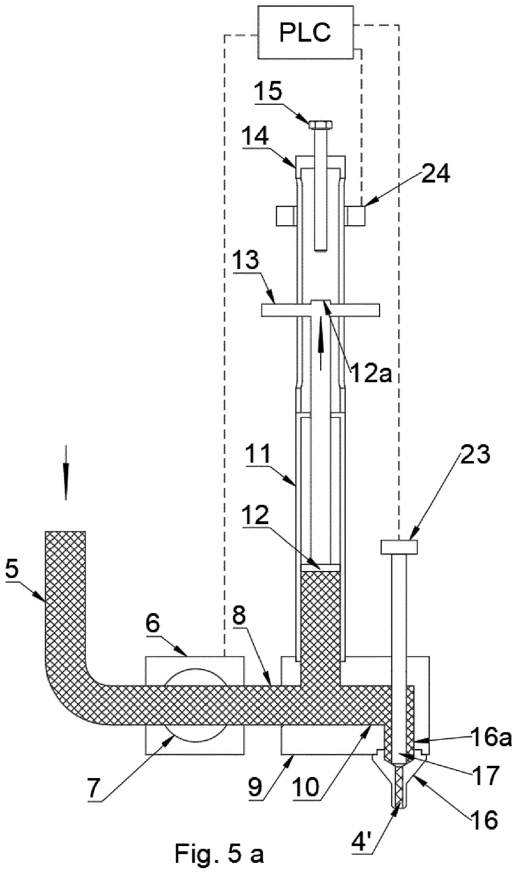

The first embodiment of the liquid dosing system according to the invention is shown in fig. 5a. In this embodiment, the system comprises a feeding channel 5 through which a liquid 4 to be dosed is fed to the system. It is obvious to a man skilled in the art that there may be more channels feeding the liquid to the system from numerous sources (not shown in the drawings).

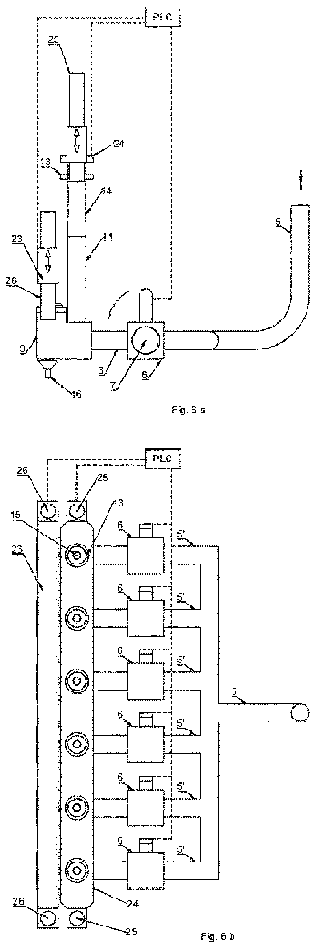

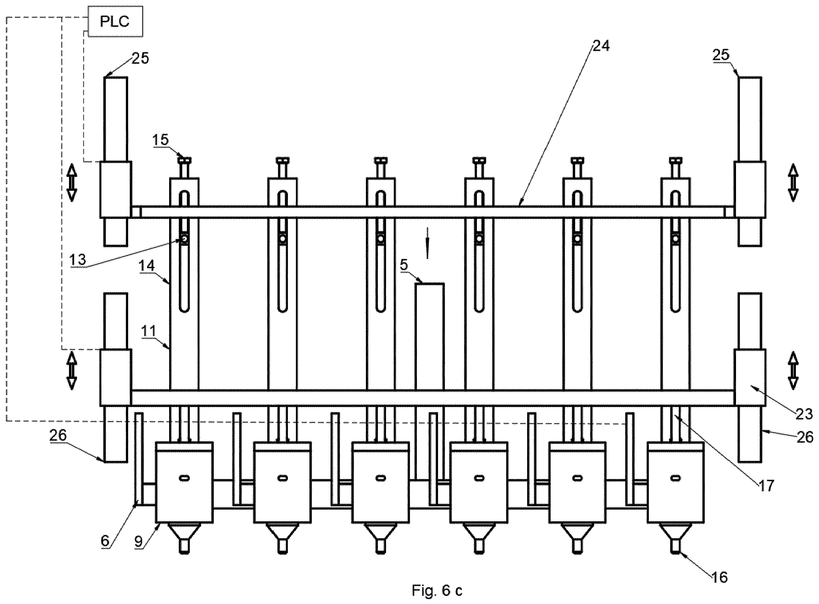

The system according to the invention shown in figs. 5a - 5d has a dosing nozzle 16. Also, there may be more dosing nozzles 15, e.g. six as shown in the embodiment shown in figs. 6a - 6c. The liquid is fed through the feeding channel 5 in a state of overpressure which means here that the liquid 4 is under a pressure higher than the pressure at the outlet of the nozzle 16 (the pressure in the space into which the dose is delivered).

The nozzle 16 communicates with the feeding channel 5 via a valve 6 having a stem 7. Downstream the valve 6, the liquid flows into a dosing module 9. When the valve 6 is open the feeding channel 5 is in tight hydraulic communication with the dosing module 9. The dosing module 9 has an internal channel 10 and comprises a cylinder 11 in which a first piston 12 is located. The first piston 12 reciprocates between an upper position and a lower position.

The liquid 4 flowing into the dosing module 9, due to its overpressure, pushes against the first piston 12 and fills the volume of the cylinder 11 below the first piston 12. The piston stem 12a has a crossbar 13. This method of filling the cylinder 11 is advantageous because it eliminates cavitation which could occur if the cylinder were filled by high-speed drawing the liquid in by means of the piston. The process of dosing in which the first piston 12 is driven upwards by the pressure of the liquid 4 may therefore be very fast but its prerequisite is that the liquid is fed to the system in a state of overpressure.

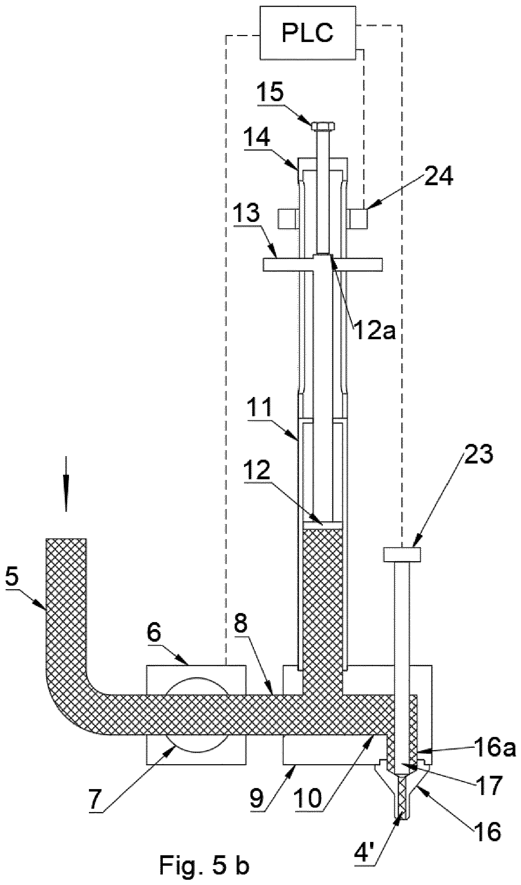

On top of the cylinder 11 a fixed body 14 is provided in which an adjustable blocking means is located, in this example the blocking means is a regulatory screw 15. Another suitable adjustable blocking means may also be used instead of the regulatory screw 15, e.g. a movable stopper to be blocked by a clamp in a desired position. The first piston 12 moves upwards until its stem 12a abuts the regulatory screw 15. The situation in which the first piston 12 is in its upper position with its stem 12a abutting the regulatory screw 15 is shown in fig. 5b.

The dosing module 9 further comprises a dosing nozzle 16 and a dozing nozzle channel 16a. In the dozing nozzle channel 16a a spike 17 is located. The spike 17 reciprocates between an upper position and a lower position. When the spike 17 is in its lower position, it closes the dosing nozzle 16. After a dosing cycle a small amount of the liquid 4' remains within the dosing nozzle 16, the liquid 4' being held by the forces of surface tension resulting from sufficiently small internal diameter of the dosing nozzle 16. The dosing nozzle 16 is preferably so designed that the volume of the liquid 4' remaining therein is as small as possible.

Fig. 5b shows the first embodiment of the system according to the invention after the dosing module 9 has been filled and the delivery of doses has not yet started.

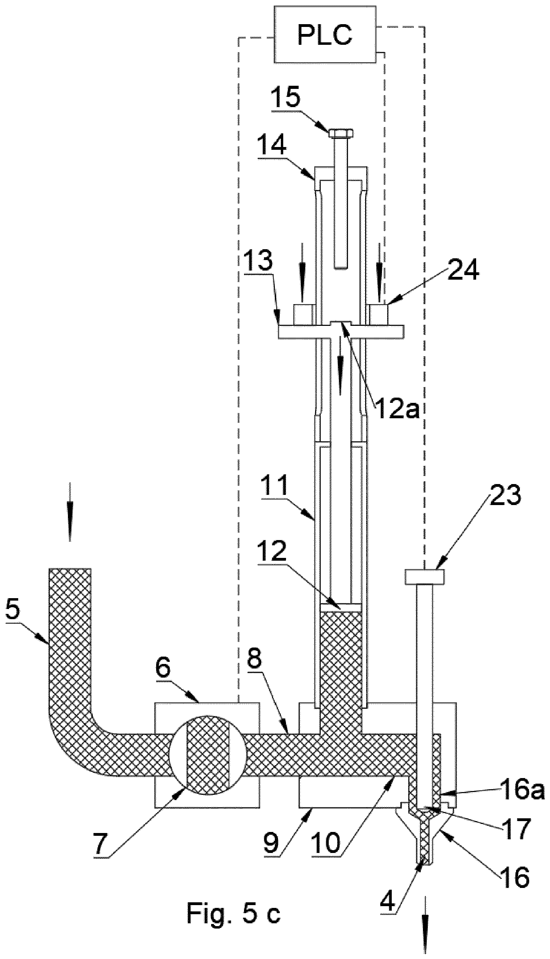

In fig. 5c, the first embodiment of the system according to the invention is shown during the dose delivery. The dose delivery is preceded by turning the stem 7 of the valve 6 by 90° which results in that the liquid 4 in the feeding channel 5 is cut off from the dosing module 9. As mentioned above, the spike 17 is adapted to reciprocate cyclically and during dosing it is located in its upper position.

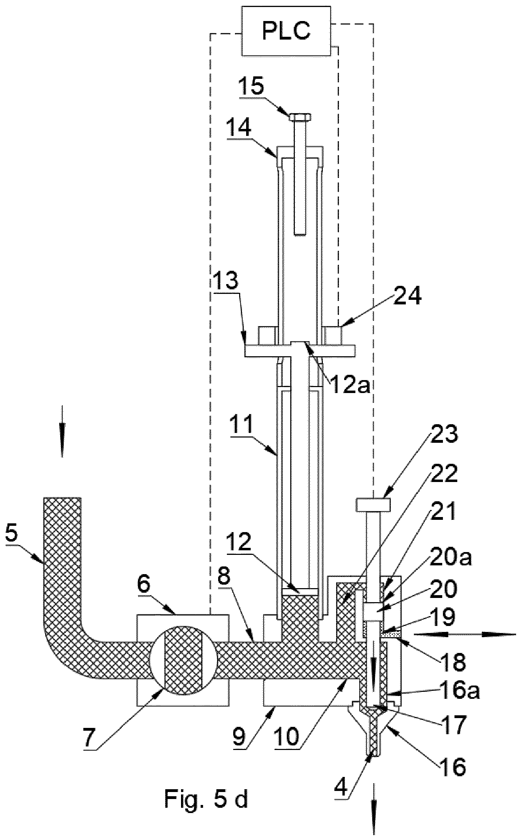

In fig. 5d the second embodiment of the system according to the invention is shown in a stage when the dose delivery has been completed. This second embodiment differs from that shown in fig. 5a only in that it is provided with elements designed to prevent drops of the liquid 4 from forming on the nozzle end. This would be disadvantageous as the drops could fall off and disturb the operation of the system. In this embodiment the spike 17 has in its central part a protuberance forming a second piston 20 that moves with the spike 17 in a cylinder 21 tightly a surrounding the second piston 20.

Said surrounding cylinder 21 is hydraulically connected with the internal channel 10 above the second piston 20 and it communicates via a ventilation channel 18 with the outside environment below the second piston 20. As the upper part of the cylinder 21 is hydraulically connected with the internal channel 10 of the dosing module 9 by an intermediate channel 22, the liquid 4 is advantageously drawn into the cylinder 21 when the spike 17 is moving downwards which compensates the effect of pushing the liquid 4 through the dosing nozzle 16. Due to the fact that there is a space below the second piston 20 communicating via the ventilation channel 18 with the outside environment, the air can flow freely in under the second piston 20 during its movement upwards and it can flow freely out of the system when the second piston 20 moves downwards.

As may be seen in figs. 5a -5d, the movement of the spike 17 is forced by a second driving means in the form of a pushrod 23 associated with the spike 17. When the inflow of the liquid 4 is cut off by the closure of the valve 6, the spike 17 is being raised by the pushrod 23 to the upper position which results in opening of the dosing nozzle 16.

The first piston 12 has a first driving means in the form of a pushrod 24 adapted to cyclically move the first piston 12 downwards. During the dose delivery, the pushrod 24 is pressing against the crossbar 13 so that the first piston 12 is displaced to its final lower position which is always the same. When this final lower position of the first piston 12 has been reached, the delivery of an individual dose is completed. The volume of the dose is defined by the distance between the upper position and the final lower position of the first piston 12. As the final lower position is never changed, the dose regulation is realized by adjustment of the regulation screw 15.

The pushrods 23 and 24 may be driven e.g. pneumatically, hydraulically or electrically and they may be suspended by a typical suitable method known to the men skilled in the art.

The first and second driving means in the form of the pushrods 24 and 23 are synchronized with each other and with the valve 6 in such a way, that the first piston 12 is moved downwards pushing the liquid 4 out of the system when the spike 17 is in its upper position and the valve 6 is closed. The synchronization may be realized in any suitable way known the men skilled in the art, e.g. by means of an automatic control system PLC shown in the figures symbolically.

Upon completion of an individual dose delivery, the cycle is repeated. The spike 17 is displaced by the pushrod 23 to the lower position causing the dosing nozzle 16 to be closed and the stem 7 of the valve 16 is rotated by 90° again and returned to its former position allowing the liquid 4 to fill the cylinder 11 again. During the closing of the dosing nozzle 16, the spike 17, by moving downwards, tends to push the liquid 4 through the dosing nozzle 16. As mentioned above, as a result of this drops of the liquid 4 may form on the nozzle end which is disadvantageous and may disturb the operation of the system.

In order to achieve full compensation of the effect of pushing the liquid 4 out by the spike 17 during the closing of the dosing nozzle 16, the area of an operating surface 20a of the second piston 20 contacting the liquid 4 above should be equal to the cross-section area of the spike 17. Optionally, in order to achieve an additional sucking in effect, the area of the operating surface 20a should be bigger than the cross-section area of the spike 17.

As a rule, both the spike 17 and the second piston 20 have a cylindrical shape so that their cross-sections are circular. In such case, assuming that a pitch of the spike 17 equals "S", the diameter of the spike 17 equals "d", the diameter of the second piston 20 equals "D", the volume of the liquid 4 being pushed out by the spike 17 equals "V1" and the volume of the liquid 4 being sucked in by the second piston 20 equals "V2", then:

$$V1 = S \cdot \textstyle\prod d^2/4 \quad V2 = S \cdot \textstyle\prod D^2/4 - S \cdot \textstyle\prod d^2/4$$

Assuming that the compensation should be 100%, i.e. V1=V2, then it results from the equation above:

$$D = d \cdot \sqrt{2}$$

If a second piston 20 is used having a diameter D> d · √2, then the effect of sucking in the liquid 4 will be stronger than the effect of pushing it out of the system. Such a solution may be used in order to avoid the effect of forming the drops and uncontrolled dripping of a liquid of low viscosity.

Figs. 6a - 6c show the views of another embodiment of the liquid dosing system according to the invention. In this embodiment the system has six dosing modules 9 with six dosing nozzles 16, all of them being fed by one feeding channel 5, each one via a corresponding valve 6. The feeding channel 5 is branched in this embodiment and has six branches 5' - one for each dosing nozzle 16.

The system shown in figs. 6a - 6c is further provided with a common first driving means 24 adapted to cyclically move simultaneously downwards the first pistons 12 of all the dosing modules 9. The system is also provided with a common second driving means 23 adapted to cyclically move simultaneously the spikes 17 of all the dosing modules 9 between the upper position and the lower position of each spike 17. Similarly, as in the former embodiment, said first and second driving means 24 and 23 are synchronized with each other and with the valve 6 in such a way, that the first pistons 12 is moved downwards pushing the liquid out of the system when the spikes 17 are in their upper positions and the valves 6 are closed. The synchronization may be realized in any suitable way known the men skilled in the art, e.g. by means of an automatic control system PLC shown in the figures symbolically.

The first and second driving means may be realized as pushrods respectively 24 and 23 reciprocating between the upper and lower positions. The pushrod 23 may be suspended by its opposite ends on a typical linear guiding mechanism 26 and analogically, the pushrod 24 may be suspended by on a typical linear guiding mechanism 25.

Another advantage of the system according to the invention is that if there are numerous dosing modules 9, the volume of a dose may be individually adjusted in each dosing module 9.

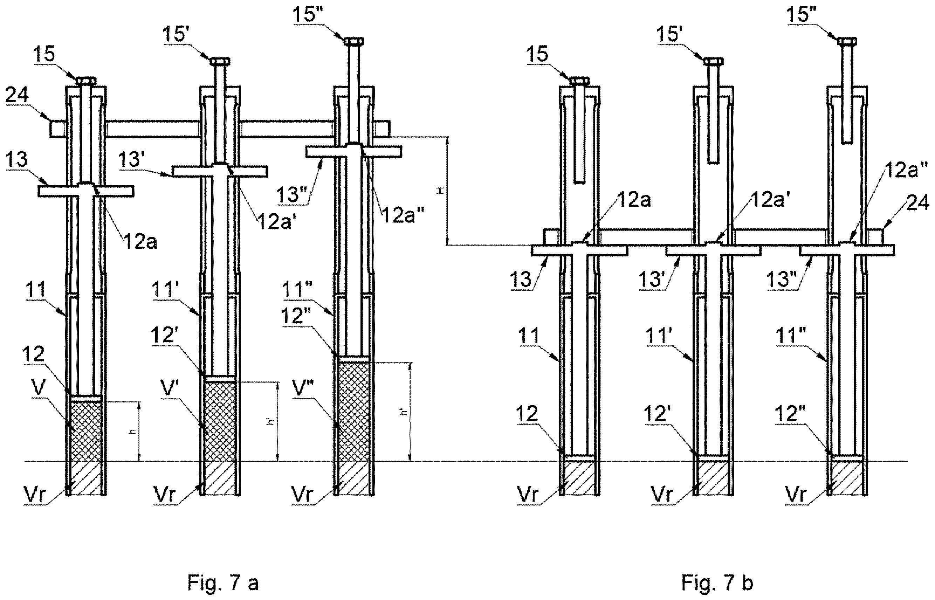

In figs. 7a and 7b, a fragmentary cross-section of an exemplary assembly of three dosing modules 9 is shown. Three cylinders 11, 11' and 11" are shown with their corresponding first pistons 12, 12' and 12" and regulatory screws 15, 15' and 15". In fig. 7a the stems 12a, 12a' i 12a" of the first pistons 12, 12' and 12" abut the regulatory screws 15, 15' and 15" which means that the cylinders 11, 11' and 11" have been filled with the liquid and are ready for dose delivery.

In the illustrated example each of the regulatory screws 15, 15' and 15" has been adjusted to a different position - the screw 15 in the lowest position, the screw 15' in an intermediary position and the screw 15" in the highest position. The surfaces of all the first pistons 12, 12' and 12" contacting the liquid 4 are the same, i.e. the volume of liquid filling an individual cylinder 11, 11' or 11" depends only on the upper position of its corresponding first piston 12, 12' or 12". Consequently, each of the three cylinders 11, 11' and 11" is filled with a different volume of the liquid 4. The cylinder 11 contains a volume $V+V_r$, the cylinder 11' contains a volume $V'+V_r$ and the cylinder 11" contains a volume $V"+V_r$. Between these volumes there is a relationship: $V + V_r < V' + V_r < V" + V_r$, and therefore $V < V' < V"$. As shown in fig. 7a, before the dose delivery begins, the pushrod 24 is positioned above all the crossbars 13, 13' and 13".

When the dose delivery begins the pushrod 24 contacts the crossbar 13" first, then the crossbar 13' and finally the crossbar 13 which results in the liquid 4 being pushed out of the corresponding cylinders in the same sequence by the first piston 12", then the first piston 12' and finally by the first piston 12. In fig. 7b a situation is shown where the dose delivery process has been completed. The pushrod 24 is in its lower position. During the dose delivery the pushrod 24 was moved by a distance H displacing the subsequent first pistons by corresponding distances h, h' and h". Between these distances there is a relationship: $h < h' < h" < H$.

Obviously, the regulatory screws 15, 15' and 15" may be adjusted as desired. Their adjustments may differ and specifically they may be the same. The distance H must be greater than the distances h, h' and h", or in a particular example the distance H may be equal to the greatest of the distances h, h' and h". As shown in fig. 7b, upon completion of the dose delivery the first pistons 12, 12' and 12" have not reached the bottoms of the cylinders 11, 11' and 11" and therefore some residual volume $V_r$ of the liquid remains inside. In a particular case $V_r$ may equal zero. Comparison of fig. 7a and 7b shows that due to the different adjustments of the regulatory screws 15, 15' and 15", different volumes V, V' and V" of the liquid 4 may be pushed out of each of the cylinders 11, 11' and 11". As shown, the system according to the invention allows for a simple, precise and independent dose regulation in each individual dosing module 9.

## Claims

1. A liquid dosing system comprising at least one feeding channel (5) for feeding the liquid (4) to the system and at least one dosing nozzle (16), each dosing nozzle (16) communicating with the at least one feeding channel (5) via a corresponding valve (6), wherein the at least one feeding channel (5) is adapted to feed the liquid (4) in a state of overpressure, and in that a dosing module (9) is located between each dosing nozzle (16) and the corresponding valve (6), the dosing module (9) comprising:

   i. a cylinder (11) with a first piston (12) adapted to reciprocate within the cylinder (11) between an upper position and a lower position;
   ii. a dosing nozzle channel (16a) in which a spike (17) is located, the spike being adapted to reciprocate within the dosing nozzle channel (16a) between an upper position in which the nozzle (16) is open and a lower position in which the nozzle (16) is closed;
   wherein each valve (6) may take a closed position in which the dosing module (9) is cut off from the feeding channel (5), or an open position enabling a tight hydraulic communication of the feeding channel (5) with the dosing module (9) in which open position the over pressured liquid is pushing against the first piston (12) within the cylinder (11), and
   wherein the system is further provided with a first driving means (24) adapted to cyclically move the first piston (12) downwards **characterized in that** the system is further provided with a second driving means (23) adapted to cyclically move the spike (17) between its upper position and its lower position in relation to the dosing nozzle channel (16a), the first and second driving means (23, 24) being synchronized with each other and with each valve (6) so that the first piston (12) is moved downwards so that the liquid (4) is pushed out of the system while the spike (17) is in its upper position and the valve (6) is in its closed position.

2. The liquid dosing system according to claim 1, **characterized in that** the upper position of the first piston (12) is defined by an adjustable blocking means (15) limiting the upward movement of a stem (12a) of the first piston (12).

3. The liquid dosing system according to claim 2, **characterized in that** it comprises at least two dosing nozzles (16), and **in that** in each dosing module (9) of the corresponding dosing nozzle (16) the upper position of the first piston (12) is defined by the adjustable blocking means (15), the upper positions of said first pistons (12) being located at the same level or at different levels.

4. The liquid dosing system according to claim 1, **characterized in that** it comprises at least two dosing modules (9), the system being provided with a common first driving means (24) adapted to move simultaneously the first pistons (12) of all the dosing modules (9) and with a common second driving means (23) adapted to move simultaneously the spikes (17) of all the dosing modules (9).

5. The liquid dosing system according to claim 1 or 4, **characterized in that** the second driving means of the spike (17) and the first driving means of the first piston (12) are constituted by pushrods (23, 24) which are adapted to be reciprocated from an upper position to a lower position, each pushrod (23, 24) being suspended by its opposite ends on a corresponding linear guiding mechanism (25, 26).

6. The liquid dosing system according to claim 1, **characterized in that** the cylinder (11) of the dosing module (9) communicates with the dosing nozzle channel (16a) via an internal channel (10).

7. The liquid dosing system according to claim 1, **characterized in that** the spike (17) is provided in its central part with a protuberance forming a second piston (20) that is movable within a surrounding cylinder (21) during the movement of the spike (17), the cylinder (21) being hydraulically connected with the internal channel (10) above the second piston (20), and communicating via a ventilation channel (18) with the outside environment below the second piston (20).

8. The liquid dosing system according to claim 7, **characterized in that** the second piston (20) has an liquid contacting operational surface (20a) which is at least equal to a cross-section surface of the spike (17).

9. The liquid dosing system according to claim 1, **characterized in that** the second driving means (23) of the spike (17) and the first driving means (24) of the first piston (12) are pneumatic, hydraulic or electric driving means.

**Patentansprüche**

1. Flüssigkeitsdosiersystem, umfassend mindestens einen Zuführkanal (5) zum Zuführen der Flüssigkeit (4) zum System und mindestens eine Dosierdüse (16), wobei jede Dosierdüse (16) mit dem mindestens einen Zuführkanal (5) über ein entsprechendes Ventil (6) in Verbindung steht, wobei der mindestens eine Zuführkanal (5) angepasst ist, um die Flüssigkeit (4) in einem Zustand des Überdrucks zuzuführen, und dass sich ein Dosiermodul (9) zwischen jeder Dosierdüse (16) und dem entsprechenden Ventil (6) befindet, wobei das Dosiermodul (9) Folgendes umfasst:

   i. einen Zylinder (11) mit einem ersten Kolben (12), der angepasst ist, um sich innerhalb des Zylinders (11) zwischen einer oberen Position und einer unteren Position hin und her zu bewegen;
   ii. einen Dosierdüsenkanal (16a), in dem sich eine Spitze (17) befindet, wobei die Spitze angepasst ist, um sich innerhalb des Dosierdüsenkanals (16a) zwischen einer oberen Position, in der die Düse (16) offen ist, und einer unteren Position, in der die Düse (16) geschlossen ist, hin und her zu bewegen;
   wobei jedes Ventil (6) eine geschlossene Position, in der das Dosiermodul (9) vom Zuführkanal (5) abgeschnitten ist, oder eine offene Position einnehmen kann, die eine dichte hydraulische Verbindung des Zuführkanals (5) mit dem Dosiermodul (9) ermöglicht, wobei in der offenen Position die unter Überdruck stehende Flüssigkeit gegen den ersten Kolben (12) innerhalb des Zylinders (11) drückt, und
   wobei das System ferner mit einem ersten Antriebsmittel (24) versehen ist, das angepasst ist, um den ersten Kolben (12) zyklisch nach unten zu bewegen, **dadurch gekennzeichnet, dass** das System ferner mit einem zweiten Antriebsmittel (23) versehen ist, das angepasst ist, um die Spitze (17) zyklisch zwischen ihrer oberen Position und ihrer unteren Position in Bezug auf den Dosierdüsenkanal (16a) zu bewegen, wobei die ersten und zweiten Antriebsmittel (23, 24) miteinander und mit jedem Ventil (6) synchronisiert sind, sodass der erste Kolben (12) nach unten bewegt wird, sodass die Flüssigkeit (4) aus dem System herausgedrückt wird, während die Spitze (17) in ihrer oberen Position ist und das Ventil (6) in seiner geschlossenen Position ist.

2. Flüssigkeitsdosiersystem nach Anspruch 1, **dadurch gekennzeichnet, dass** die obere Position des ersten Kolbens (12) durch ein einstellbares Blockiermittel (15) definiert ist, das die Aufwärtsbewegung eines Schaftes (12a) des ersten Kolbens (12) einschränkt.

3. Flüssigkeitsdosiersystem nach Anspruch 2, **dadurch gekennzeichnet, dass** es mindestens zwei Dosierdüsen (16) umfasst und dass in jedem Dosiermodul (9) der entsprechenden Dosierdüse (16) die obere Position des ersten Kolbens (12) durch das einstellbare Blockiermittel (15) definiert ist, wobei sich die oberen Positionen der ersten Kolben (12) auf demselben Niveau oder auf unterschiedlichen Niveaus befinden.

4. Flüssigkeitsdosiersystem nach Anspruch 1, **dadurch gekennzeichnet, dass** es mindestens zwei Dosiermodule (9) umfasst, wobei das System mit einem gemeinsamen ersten Antriebsmittel (24), das angepasst ist, um die ersten Kolben (12) aller Dosiermodule (9) simultan zu bewegen, und mit einem gemeinsamen zweiten Antriebsmittel (23), das angepasst ist, um die Spitzen (17) aller Dosiermodule (9) simultan zu bewegen, versehen ist.

5. Flüssigkeitsdosiersystem nach Anspruch 1 oder 4, **dadurch gekennzeichnet, dass** das zweite Antriebsmittel der Spitze (17) und das erste Antriebsmittel des ersten Kolbens (12) durch Schubstangen (23, 24) gebildet werden, die von einer oberen Position in eine untere Position hin- und herbewegt werden können, wobei jede Schubstange (23, 24) mit ihren gegenüberliegenden Enden an einem entsprechenden linearen Führungsmechanismus (25, 26) aufgehängt ist.

6. Flüssigkeitsdosiersystem nach Anspruch 1, **dadurch gekennzeichnet, dass** der Zylinder (11) des Dosiermoduls (9) mit dem Dosierdüsenkanal (16a) über einen Innenkanal (10) in Verbindung steht.

7. Flüssigkeitsdosiersystem nach Anspruch 1, **dadurch gekennzeichnet, dass** die Spitze (17) in ihrem Mittelteil mit einem Vorsprung versehen ist, der einen zweiten Kolben (20) bildet, der während der Bewegung der Spitze (17) innerhalb eines umgebenden Zylinders (21) beweglich ist, wobei der Zylinder (21) hydraulisch mit dem Innenkanal (10) oberhalb des zweiten Kolbens (20) verbunden ist und über einen Belüftungskanal (18) mit der äußeren Umgebung unterhalb des zweiten Kolbens (20) in Verbindung steht.

8. Flüssigkeitsdosiersystem nach Anspruch 7, **dadurch gekennzeichnet, dass** der zweite Kolben (20) eine mit Flüssigkeit in Kontakt stehende Betriebsoberfläche (20a) aufweist, die mindestens gleich einer Querschnittsoberfläche der Spitze (17) ist.

9. Flüssigkeitsdosiersystem nach Anspruch 1, **dadurch gekennzeichnet, dass** das zweite Antriebsmittel (23) der Spitze (17) und das erste Antriebsmittel (24) des ersten Kolbens (12) pneumatische, hydraulische oder elektrische Antriebsmittel sind.

**Revendications**

1. Un système de dosage de liquide comprenant au moins un canal d'alimentation (5) pour alimenter le système en liquide (4) et au moins une buse de dosage (16), chaque buse de dosage (16) communiquant avec l'au moins un canal d'alimentation (5) par l'intermédiaire d'une vanne correspondante (6), dans lequel

l'au moins un canal d'alimentation (5) est adapté pour alimenter le liquide (4) en état de surpression, et dans lequel un module de dosage (9) est situé entre chaque buse de dosage (16) et la vanne correspondante (6), le module de dosage (9) comprenant:

i. un cylindre (11) avec un premier piston (12) adapté pour aller et venir à l'intérieur du cylindre (11) entre une position supérieure et une position inférieure;
ii. un canal de buse de dosage (16a) dans lequel se trouve une pointe (17), la pointe étant adaptée pour aller et venir dans le canal de buse de dosage (16a) entre une position supérieure dans laquelle la buse (16) est ouverte et une position inférieure dans laquelle la buse (16) est fermée;

dans lequel chaque vanne (6) peut prendre une position fermée dans laquelle le module de dosage (9) est coupé du canal d'alimentation (5), ou une position ouverte permettant une communication hydraulique étanche du canal d'alimentation (5) avec le module de dosage (9), dans laquelle position ouverte le liquide surpressé pousse contre le premier piston (12) à l'intérieur du cylindre (11), et

dans lequel le système est en outre pourvu d'un premier moyen d'entraînement (24) adapté pour déplacer cycliquement le premier piston (12) vers le bas, **caractérisé en ce que** le système est en outre pourvu d'un second moyen d'entraînement (23) adapté pour déplacer cycliquement la pointe (17) entre sa position supérieure et sa position inférieure par rapport au canal de buse de dosage (16a), le premier et le second moyen d'entraînement (23, 24) étant synchronisés l'un avec l'autre et avec chaque vanne (6) de sorte que le premier piston (12) est déplacé vers le bas pour que le liquide (4) soit expulsé du système alors que la pointe (17) est dans sa position supérieure et que la vanne (6) est dans sa position fermée.

2. Le système de dosage de liquide selon la revendication 1, **caractérisé en ce que** la position supérieure du premier piston (12) est définie par un moyen de blocage réglable (15) limitant le mouvement vers le haut d'une tige (12a) du premier piston (12).

3. Le système de dosage de liquide selon la revendication 2, **caractérisé en ce qu'**il comprend au moins deux buses de dosage (16), et **en ce que** dans chaque module de dosage (9) de la buse de dosage correspondante (16), la position supérieure du premier piston (12) est définie par le moyen de blocage réglable (15), les positions supérieures desdits premiers pistons (12) étant situées au même niveau ou à des niveaux différents.

4. Le système de dosage de liquide selon la revendication 1, **caractérisé en ce qu'**il comprend au moins deux modules de dosage (9), le système étant pourvu d'un premier moyen d'entraînement commun (24) adapté pour déplacer simultanément les premiers pistons (12) de tous les modules de dosage (9) et d'un second moyen d'entraînement commun (23) adapté pour déplacer simultanément les pointes (17) de tous les modules de dosage (9).

5. Le système de dosage de liquide selon la revendication 1 ou 4, **caractérisé en ce que** le second moyen d'entraînement de la pointe (17) et le premier moyen d'entraînement du premier piston (12) sont constitués par des tiges de poussée (23, 24) qui sont adaptées pour aller et venir d'une position supérieure à une position inférieure, chaque tige de poussée (23, 24) étant suspendue par ses extrémités opposées à un mécanisme de guidage linéaire correspondant (25, 26).

6. Le système de dosage de liquide selon la revendication 1, **caractérisé en ce que** le cylindre (11) du module de dosage (9) est en communication avec le canal de buse de dosage (16a) par l'intermédiaire d'un canal interne (10).

7. Le système de dosage de liquide selon la revendication 1, **caractérisé en ce que** la pointe (17) est pourvue dans sa partie centrale d'une protubérance formant un second piston (20) qui est mobile à l'intérieur d'un cylindre environnant (21) pendant le mouvement de la pointe (17), le cylindre (21) étant relié hydrauliquement avec le canal interne (10) au-dessus du second piston (20), et communiquant par l'intermédiaire d'un canal de ventilation (18) avec l'environnement extérieur au-dessous du second piston (20).

8. Le système de dosage de liquide selon la revendication 7, **caractérisé en ce que** le second piston (20) a une surface opérationnelle en contact avec le liquide (20a) qui est au moins égale à une surface de section transversale de la pointe (17).

9. Le système de dosage de liquide selon la revendication 1, **caractérisé en ce que** le second moyen d'entraînement (23) de la pointe (17) et le premier moyen d'entraînement (24) du premier piston (12) sont des moyens d'entraînement pneumatiques, hydrauliques ou électriques.

Fig. 1 a

Fig. 1 b

Fig. 1 c

Fig. 2

Z

C   T

ZW

Fig. 3 a

Z

C   T

ZW

Fig. 3 b

Fig. 4

Fig. 5 a

PLC

15

14

24

13

12a

11

12

23

5

6

8

16a

7

17

9    10    16

4'

Fig. 5 b

Fig. 5 c

Fig. 5 d

Fig. 6 a

Fig. 6 b

Fig. 6 c

Fig. 7 b

Fig. 7 a

**EP 3 913 334 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3656534 A

- WO 2018015648 A